# EUROPEAN PATENT SPECIFICATION

(11) **EP 4 150 265 B1**
(45) Date of publication and mention of the grant of the patent: **18.03.2026**
(21) Application number: 21805059.9
(22) Date of filing: 14.05.2021
(51) Int. Cl.: F24F 5/00, C09K 5/06, F28D 1/04, F28D 15/00, F28D 20/02, F25B 6/02, F25B 40/02, F25B 41/31, F25B 41/40, F25B 39/02, F25B 5/00

(54) **COOLING SYSTEM**
KÜHLSYSTEM
SYSTÈME DE REFROIDISSEMENT

(30) Priority: 15.05.2020 US 202063025985 P
(43) Date of publication of application: 22.03.2023
(73) Proprietor: Netenergy (Naim Energy Technologies, LLC), Chicago, IL 60616 (US)
(72) Inventor: AL-HALLAJ, Said, Chicago, IL 60616 (US); DENKMANN, James, L., Chicago, IL 60616 (US)
(74) Representative: Locas, Davide
(86) International application number: PCT/US2021/032463
(87) International publication number: WO 2021/231873

(56) References cited:
- WO-A1-2012/146368
- CN-A- 104 236 177
- CN-U- 204 007 261
- CN-U- 204 007 261
- US-A- 4 708 849
- US-A1- 2014 338 389
- US-A1- 2018 283 709
- US-B2- 10 047 985
- LI GANG ET AL: "Review of cold storage materials for air conditioning application", INTERNATIONAL JOURNAL OF REFRIGERATION, vol. 35, no. 8, 23 June 2012 (2012-06-23), pages 2053 - 2077, XP028953313, ISSN: 0140-7007, DOI: 10.1016/J.IJREFRIG.2012.06.003

## Description

### FIELD OF THE INVENTION

The field of this invention is in cooling systems, particularly as part of building and facilities heating and cooling systems, including the use of geothermal energy for heating and cooling.

### BACKGROUND OF THE INVENTION

Radiant cooling systems for buildings and facilities are known. Such systems chill a fluid, typically water, and circulate it through a series of pipes that are imbedded in a thermal mass, such as a concrete floor. These systems are known for their inefficiency and are known to have poor coefficients of performance. Also, because they are principled on real-time radiant heat transfer, the system must be continually operated to maintain space comfort, especially during peak temperatures extremes in a given day. Control of the circulating fluid temperature must be maintained at a temperature less than the space dewpoint temperature to preclude sweating and dripping which minimizes effectiveness of radiant cooling systems.

CN 104236177 A discloses a phase-change heat storage and coolant supercooling heat exchanger and an air conditioning system with the same. The phase-change heat storage and coolant supercooling heat exchanger comprises a housing, a first coil, a second coil and a phase-change heat storage medium; the first coil and the second coil are arranged inside the housing; the phase-change heat storage medium fills the housing.

US 10047985 B2 discloses a refrigerant flow through a refrigerant circuit may be cooled with a cold cooling fluid flow from a thermal storage unit to generate a warm cooling fluid flow. The cold cooling fluid flow and the warm cooling fluid flow may be thermally isolated in the thermal storage unit, and a chiller system may cool the warm cooling fluid flow from the thermal storage unit to at least partially produce the cold cooling fluid flow.

### SUMMARY OF THE INVENTION

The present invention refers to a cooling system according to claim 1.

In one aspect of the invention, as defined by appended independent claim 1, a cooling system inter alia comprises an air cooled condensing unit (ACCU) having a condenser outlet and a condenser inlet, and a phase change composite thermal energy storage module (PCCTESM) having first and second fluid paths disposed therethrough, wherein each of the first and second fluid paths have an inlet and an outlet. The cooling system further comprises at least one air handling unit (AHU) having an AHU inlet and an AHU outlet, a first expansion valve disposed between the condenser outlet and the first fluid path inlet, a fluid connection between the second fluid path inlet and the condenser outlet, a second expansion valve disposed between the AHU inlet and the second fluid path outlet, and a second fluid connection that connects the first fluid path outlet and the AHU outlet to the condenser inlet.

In another aspect of the invention, as defined by appended independent claim 1 in combination with appended dependent claim 6, a cooling system inter alia comprises a first air cooled condensing unit (ACCU) having a first condenser outlet and a first condenser inlet, a second air cooled condensing unit (ACCU) having a second condenser outlet and a second condenser inlet, and a phase change composite thermal energy storage module (PCCTESM) having first and second fluid paths disposed therethrough, wherein each of the first and second fluid paths have an inlet and an outlet. The cooling system further comprises at least one air handling unit (AHU) having an AHU inlet and an AHU outlet, a first fluid connection between the first condenser outlet and the second fluid path inlet, a first expansion valve disposed between the AHU inlet and the second fluid path outlet, a second expansion valve disposed between the second condenser outlet and the first fluid path inlet, a second fluid connection between the first fluid path outlet and the second condenser inlet, and a third fluid connection that connects the AHU outlet to the first condenser inlet.

A phase change composite thermal energy storage module (PCCTESM) comprises a first fluid path disposed therethrough, the first fluid path having an inlet and an outlet, a second fluid path disposed therethrough, the second fluid path having an inlet and an outlet, and a plurality of phase change composite slabs (PCCS) disposed in thermal contact with the first and second fluid paths.

The present invention may also have at least one of the preferred features set out below.

Preferably the at least one AHU comprises two or more AHU's each having an AHU inlet and an AHU outlet, wherein the second expansion valve is disposed between each AHU inlet and the second fluid path outlet, and the second fluid connection connects the first fluid path outlet and each AHU outlet to the condenser inlet.

Preferably the first fluid path comprises a plurality of first heat exchangers and the second fluid path comprises a plurality of second heat exchangers.

Preferably the plurality of first heat exchangers are in fluid communication with a first common inlet source and a first common outlet header, and the plurality of second heat exchangers are in fluid communication with a second common inlet source and a second common outlet header.

Preferably each of the pluralities of first and second heat exchangers comprises an aluminum micro channel heat exchanger.

Preferably the refrigerant comprises first and second refrigerants, and wherein the first refrigerant flows through the first ACCU and the second refrigerant flows through the second ACCU.

Preferably the at least one PCCS comprises a thermally conductive graphite matrix with a wax impregnated within the graphite matrix.

Preferably the wax has a liquid to solid phase change temperature in a range between about 2 °C and about 4 °C.

### BRIEF DESCRIPTION OF THE DRAWINGS

The accompanying drawings form a part of the specification and are to be read in conjunction therewith, in which like reference numerals are employed like or similar parts in the various views and wherein:
FIG 1 is a schematic diagram of the first embodiment usable in the context of the present invention;
FIG 2 is a schematic diagram for a control methodology for the first embodiment shown in FIG 1;
FIG 3 is a schematic diagram of the second embodiment usable in the context of the present invention;
FIG 4 is a schematic diagram for a control methodology for the second embodiment shown in FIG 3;
FIG 5 is a schematic diagram of a phase change composite thermal energy storage module in agreement with one embodiment of the present invention;
FIG 6 is a simplified version of FIG 1 wherein minor details have been removed to show the basic structure and interconnections of the underlying components; and
FIG 7 is a simplified version of FIG 3 wherein minor details have been removed to show the basic structure and interconnections of the underlying components.

### DETAILED DESCRIPTION

The following detailed description of the invention references the accompanying drawing figures that illustrate the specific embodiments in which the invention can be practiced. The embodiments are intended to describe aspects of the invention in sufficient detail to practice the invention. Other embodiments can be utilized and changes can be made without departing from the scope of the present invention. The present invention is defined by the appended claims and the description is, therefore, not to be taken in a limiting sense and shall not limit the scope of equivalents to which such claims are entitled.

**List of Reference Numerals**

| **Numeral** | **Name** |
|---|---|
| 10 | System |
| 11 | System |
| 20 | Phase Change Composite Thermal Energy Storage Module (PCCTESM) 20 |
| 12 | Space Thermostat 12 |
| 13 | Data Collection Terminal 13 |
| 14 | Central Processor Unit 14 |
| 15 | Computer 15 |
| 16 | (not used) |
| 17 | Outdoor Temperature Transmitter **17** |
| 18 | Electric Utility Meter **18** |
| 19 | Fan Coil Unit Thermostat **19** |
| 21 | Module Electronic Expansion Valve 21 |
| 22 | First Distributor 22 |
| 23 | First Distributor Tubing 23 |
| 24 | High Pressure Liquid Line 24 |
| 25 | Subcooled High Pressure Liquid Header 25 |
| 26 | Module Suction Header 26 |
| 27 | Module Thermistor 27 |
| 28 | Condenser Liquid Stop Valve 28 |
| 29 | Module Superheat Thermistor 29 |
| 30 | Module Superheat Pressure Transmitter 30 |
| 31 | Branch High Pressure Liquid Line 31 |
| 32 | Combined Suction Line 32 |
| 33 | Module Electronic Valve Controller 33 |
| 34 | Suction Line Inlet to Suction Trap **34** |
| 35 | Suction Line Stop Valve 35 |
| 36 | Suction Trap 36 |
| 37 | Condenser Variable Frequency Drive 37 |
| 38 | Compressor Inlet Suction Line 38 |
| 39 | Variable Frequency Compressor 39 |
| 40 | Hot Gas Line 40 |
| 41 | Air Cooled Condenser 41 |
| 42 | Condenser Fan Motor 42 |
| 43 | Condenser Fan 43 |
| 44 | Air Cooled Condensing Unit 44 |
| 45 | Air Handling Unit Suction Line 45 |
| 46 | Fan Coil Unit 46 |
| 47 | Fan Coil Unit Evaporator 47 |
| 48 | Electronic Expansion Valve Controller 48 |
| 49 | Fan Coil Unit Suction Line 49 |
| 50 | Space Air Handling Unit 50 |
| 51 | Air Handling Unit Evaporator 51 |
| 52 | Air Handling Unit Filter Bank 52 |
| 53 | Air Handling Unit Fan 53 |
| 54 | Belt Drive 54 |
| 55 | Air Handling Unit Fan Motor 55 |
| 56 | Air Handling Unit Electronic Expansion Valve 56 |
| 57 | Air Handling Unit Electronic Expansion Valve Distributor 57 |
| 58 | Air Handling Unit Electronic Expansion Valve Distributor Tubing 58 |
| 59 | Air Handling Unit Expansion Valve Superheat Thermistor 59 |
| 60 | Air Handling Unit Expansion Valve Superheat Pressure Transmitter 60 |
| 61 | Subcooled High Pressure Liquid Line 61 |
| 62 | Air Handling Unit Variable Frequency Drive 62 |
| 63 | Air Handling Unit Expansion Valve Controller 63 |
| 64 | Tee 64 |
| 65 | Module Saturated High Pressure Liquid Header 65 |
| 66 | Electronic Expansion Valve 66 |
| 67 | Tee 67 |
| 68 | Tee 68 |
| 69-73 | (not used) |
| 74 | Air Handling Unit 74 |
| 75 | Evaporator 75 |
| 76 | Filter Bank 76 |
| 77 | Expansion Valve Controller 77 |
| 78 | Electronic Expansion Valve 78 |
| 79 | Distributor 79 |
| 80 | Distributor Tubing 80 |
| 81 | Subcooled High Pressure Liquid Line 81 |
| 82 | Air Handling Unit Expansion Valve Superheat Thermistor 82 |
| 83 | Suction Line 83 |
| 84 | Air Handling Unit Expansion Valve Superheat Pressure Transmitter 84 |
| 85 | Variable Frequency Drive 85 |
| 86 | Air Handling Unit Fan 86 |
| 87 | Belt Drive 87 |
| 88 | Variable Frequency Drive 88 |
| 89 | Module Thermistor 89 |
| 90 | Subcooled High Pressure Liquid Header 90 |
| 91 | Module Suction Header 91 |
| 92 | Supplemental Condenser Fan 92 |
| 93 | Supplemental Air Cooled Condensing Unit **93** |
| 94 | Supplemental Condenser Fan Motor 94 |
| 95 | Supplemental Condensing Unit Hot Gas Line 95 |
| 96 | Supplemental Variable Speed Compressor 96 |
| 97 | Supplemental Air Cooled Condenser 97 |
| 98 | Supplemental High Pressure Liquid Stop Valve 98 |
| 99 | Supplemental High Pressure Liquid Line 99 |
| 100 | Module Superheat Thermistor 100 |
| 101 | Module Superheat Pressure Transmitter 101 |
| 102 | Supplemental Condensing Unit Suction Trap 102 |
| 103 | Supplemental Condensing Unit Suction Line Stop Valve 103 |
| 104 | Supplemental Condensing Unit Suction Line **104** |
| 105 | Module Electronic Expansion Valve 105 |
| 106 | Module Electronic Expansion Valve Distributor 106 |
| 107 | Module Electronic Expansion Valve Distributor Tubing 107 |
| 108 | Module Saturated High Pressure Liquid Header 108 |
| 109 | Module Electronic Valve Controller 109 |
| 110 | Variable Frequency Drive 110 |
| 111 | Air Cooled Condensing Unit 111 |
| 112 | Condenser Fan 112 |
| 113 | Condenser Fan Motor 113 |
| 114 | Air Cooled Condenser 114 |
| 115 | Condensing Unit Hot Gas Line 115 |
| 116 | Compressor Suction Line 116 |
| 117 | High Pressure Liquid Stop Valve 117 |
| 118 | Suction Line Inlet To Suction Trap 118 |
| 119 | Suction Line Stop Valve 119 |
| 120 | Liquid To Suction Heat Exchanger 120 |
| 121 | Suction Trap 121 |
| 122 | Variable Speed Compressor 122 |
| 123 | Saturated High Pressure Liquid Line 123 |
| 124 | Subcooled High Pressure Liquid Line **124** |
| 125 | Compressor Suction Line **125** |
| 126 | Suction Trap Entering Line **126** |
| 127 - 200 | (not used) |
| 201 | Upper Insulation 201 |
| 202 | Lower Insulation 202 |
| 203 -220 | (not used) |
| 221 | First Change Composite Slab **221** |
| 222 | Second Phase Change Composite Slab **222** |
| 223 | Third Phase Change Composite Slab **223** |
| 224 | Fourth Phase Change Composite Slab **224** |
| 225 | Fifth Phase Change Composite Slab **225** |
| 226 | Sixth Phase Change Composite Slab **226** |
| 227 | Seventh Phase Change Composite Slab **227** |
| 228 | Eighth Phase Change Composite Slab **228** |
| 229 | Ninth Phase Change Composite Slab **229** |
| 230 | Superheated Suction Vapor **230** |
| 231 | First Cold Aluminum Micro Channel Heat Exchanger 231 |
| 232 | First Warm Aluminum Micro Channel Heat Exchanger 232 |
| 233 | Second Cold Aluminum Micro Channel Heat Exchanger 233 |
| 234 | Second Warm Aluminum Micro Channel Heat Exchanger 234 |
| 235 | Third Cold Aluminum Micro Channel Heat Exchanger 235 |
| 236 | Third Warm Aluminum Micro Channel Heat Exchanger 236 |
| 237 | Fourth Cold Aluminum Micro Channel Heat Exchanger 237 |
| 238 | Fourth Warm Aluminum Micro Channel Heat Exchanger 238 ' |
| 239 | Fifth Cold Aluminum Micro Channel Heat Exchanger 239 |
| 240 - 249 | (not used) |
| 250 | First Cold Aluminum Micro Channel Heat Exchanger Inlet Header 250 |
| 251 | First Cold Aluminum Heat Exchanger Outlet Header 251 |
| 252 | First Warm Aluminum Micro Channel Heat Exchanger Inlet Header 252 |
| 253 | First Warm Aluminum Micro Channel Heat Exchanger Outlet Header 253 |
| 254 | Second Cold Aluminum Micro Channel Heat Exchanger Inlet Header 254 |
| 255 | Second Cold Aluminum Micro Channel Heat Exchanger Outlet Header 255 |
| 256 | Second Warm Aluminum Micro Channel Heat Exchanger Inlet Header 256 |
| 257 | Second Warm Aluminum Micro Channel Heat Exchanger Outlet Header 257 |
| 258 | Third Cold Aluminum Micro Channel Heat Exchanger Inlet Header 258 |
| 259 | Third Cold Aluminum Micro Channel Heat Exchanger Outlet Header 259 |
| 260 | Third Warm Aluminum Micro Channel Heat Exchanger Inlet Header 260 |
| 261 | Third Warm Aluminum Micro Channel Heat Exchanger Outlet Header 261 |
| 262 | Fourth Cold Aluminum Micro Channel Heat Exchanger Inlet Header 262 |
| 263 | Fourth Cold Aluminum Micro Channel Heat Exchanger Outlet Header 263 |
| 264 | Fourth Warm Aluminum Micro Channel Heat Exchanger Inlet Header 264 |
| 265 | Fourth Warm Aluminum Micro Channel Heat Exchanger Outlet Header 265 |
| 266 | Fifth Cold Aluminum Micro Channel Heat Exchanger Inlet Header 266 |
| 267 | Fifth Cold Aluminum Micro Channel Heat Exchanger Outlet Header 267 |

It should be noted that researchers have explored and reported in the literature extensive studies on the subject of "using Phase Change Material for Thermal Energy Storage with Air Conditioning applications" (hereinafter referred to by the acronym PCMTESAC). The previously proposed PCMTESAC solutions included various methods to best integrate the different technologies of thermal energy storage and air conditioning. However, all such previous attempts had serious shortcomings that rendered the proposed solutions impractical or cost ineffective. For example, a basic problem was that phase change composite slabs tend to be leaky and difficult to seal, especially when coolant or heat exchanger tubing is run through them, which results in the phase change wax leaking out. Another known problem with the integration of phase change material into a large air conditioning system is that the rate of heat transfer from the phase change material was insufficient to keep up with demand during peak times.

That all prior attempts to create a practical and cost-effective PCMTESAC failed is not an entirely unexpected result because major breakthroughs in interdisciplinary fields across multiple technologies typically require knowledge and experience across the technologies. For example, PCMTESAC requires in-depth knowledge of the fundamental science, engineering, and applications of air conditioning, which are typically possessed by experienced mechanical engineers, and in addition PCMTESAC requires in-depth knowledge of material science, heat transfer, and material processing techniques, and experience with phase change material, which are typically possessed by chemical engineers or material scientists.

In order to overcome the shortcomings above and develop an innovative and superior technical PCMTESAC solution requires a previously unknown combination of elements, some of which are unknown, to produce the new and improved result. Such a solution as disclosed herein integrates thermal energy storage and air conditioning apparatus in a cost-efficient manner via a combination of material selection for the phase change material slabs and construction of the Phase Change Composite Thermal Energy Storage Module (hereinafter "PCCTESM") 20 that is integrated into air conditioning system design, operation, and control in a new way. The disclosed structure of the PCCTESM 20 provides a novel structure that solves the leakage problem by separating slabs of phase change composite material into separate fluidly sealed modules that can be stacked in thermal contact with heat exchangers that can be run through the PCCTESM 20 to heat and/or cool the phase change material as needed. Furthermore, the combination of elements disclosed herein provides an entirely new architecture for structurally and operationally integrating the PCCTESM 20 into a large scale air conditioning system. The combination of elements disclosed herein is therefore not just a simple addition or combination of previously known technologies, but rather has a performance and energy efficiency far beyond any ordinary combination of known elements combined in their normal way to produce a known result. For example, the new architecture provides for simultaneous space cooling and liquid subcooling through the phase change module using either one or two air cooled condensing units.

To those schooled in the art of air conditioning systems, those persons will be aware of the benefits of subcooling a high pressure liquid stream. Two systems are described herein, the first utilizing a single air cooled condensing unit and the second utilizing dual air cooled condensing units. As one might be aware, there is an initial cost associated with utilizing dual condensing units, however in many cases this initial cost can be offset by both electrical energy and demand savings, especially during times of high ambient temperature extremes. Use of dual air cooled condensing units affords the user to utilize the energy cost advantages of employing dual evaporating temperatures to provide simultaneous space cooling and liquid subcooling. Furthermore, the use of dual air cooled condensing units permits dual variable compressor operation in accordance with local utility electrical demand rates.

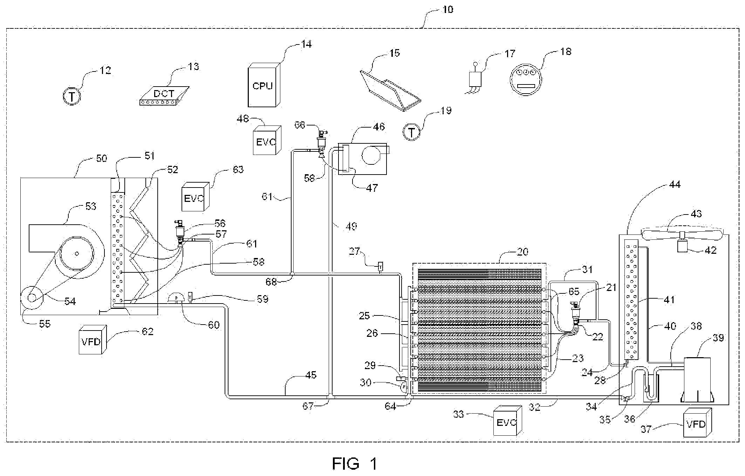

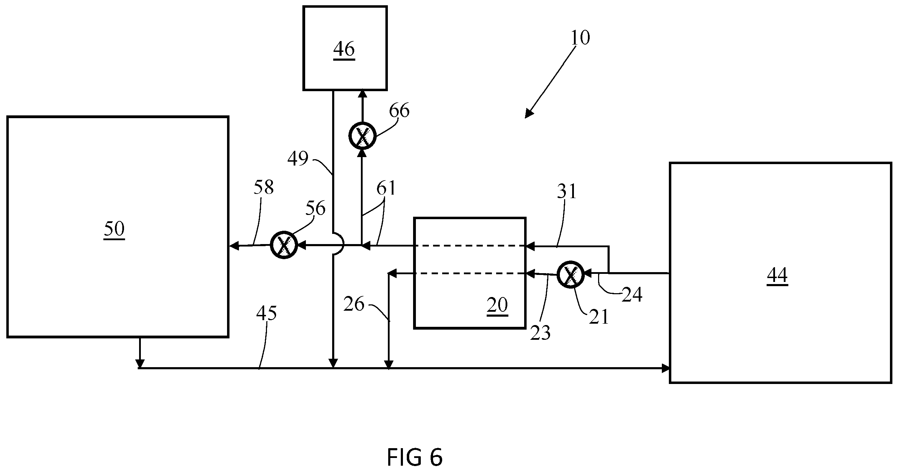

FIGS 1 and 6 depict schematic diagrams of a System **10** wherein a single Air Cooled Condensing Unit (hereinafter "ACCU") **44** is utilized to provide cooling to a space while simultaneously removing heat from a PCCTESM **20.** FIG 6 is a simplified version of FIG 1 wherein minor details have been removed to show the basic structure and interconnections of the underlying components. When forming part of the invention, the shown system comprises a PCCTESM with slabs of phase change composite as defined by appended independent claim 1.

Referring to FIGS 1 and 6, warm high pressure liquid phase refrigerant exits the ACCU **44** through Condenser Liquid Stop Valve **28** and enters High Pressure Liquid Line **24.** From here, the high pressure liquid refrigerant is directed along at least one of two fluid paths through the PCCTESM 20. In a first fluid path, high pressure liquid refrigerant flows through a Module Electronic Expansion Valve **21** and a First Distributor **22** into First Distributor Tubing **23,** and then into the PCCTESM **20.**

In a second path, high pressure liquid refrigerant flows from High Pressure Liquid Line **24** into Branch High Pressure Liquid Line **31** where it then flows into Module Saturated High Pressure Liquid Header **65** to be subcooled within the PCCTESM **20.**

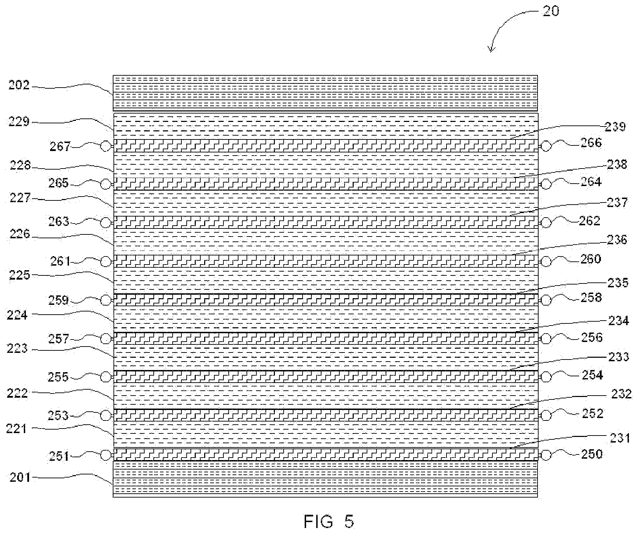

Now turning to FIG **5****,** an embodiment of the parts comprising the PCCTESM **20,** suitable for forming part of a cooling system according to the present invention, are illustrated.

Aluminum Micro Channel Heat Exchangers **231** through **239** inclusive are shown sandwiched between layers of Phase Change Composite Slabs **221** through **229** inclusive. As an alternate embodiment to this numerical arrangement, the PCCTESM **20,** may be comprised of additional or fewer Phase Change Composite Slabs **221-229** and Aluminum Micro Channel Heat Exchangers **231-239** other than those shown in FIG 5. Further, while these components have been shown in a horizontal configuration in the embodiment illustrated in FIG 5, they can be vertically arranged in an alternate embodiment.

Additionally, in describing the flow of refrigerant through the PCCTESM 20 shown in Figure 5, the primary description provided below is in the context of a co-flowing type of heat exchanger where relatively warmer and cooler streams enter the PCCTESM 20 from the same side, flow in the same direction through the PCCTESM 20, and exit from the same side. The diagram of the PCCTESM 20 shown in Figure 5 is consistent with this co-flowing context. However, in another embodiment, the PCCTESM 20 is configured in the context of a counter-flow heat exchanger where the relatively warmer and cooler streams enter the PCCTESM 20 from opposite sides and flow counter to one another exiting on opposite sides. The counter-flow context and differences in the PCCTESM 20 required for achieving the counter-flow context will be noted below where appropriate.

In an embodiment, Phase Change Composite Slabs **221-229** are comprised of a thermally conductive graphite matrix with a low temperature phase change wax impregnated within the graphite matrix. The wax changes phase between liquid and solid. In an embodiment, the phase change temperature of said wax ranges between about 2 °C and about 4 °C. The graphite matrix slab, while having a thermally conductive surface is fluidly sealed to prevent liquid phase wax from leaking out.

Along the first path, starting at the lower most portion of the PCCTESM **20,** a first cold Aluminum Micro Channel Heat Exchanger **231** receives a cold liquid and vapor refrigerant stream exiting from the Module Electronic Expansion Valve **21** shown in FIG **1** via a first Cold Aluminum Micro Channel Heat Exchanger Inlet Header **250.** The first cold Aluminum Micro Channel Heat Exchanger **231** is in thermal contact with a first Phase Change Composite Slab **221.** Heat is then free to flow from the first Phase Change Composite Slab **221** into the first Cold Aluminum Micro Channel Heat Exchanger **231.** This heat flow can cause all remaining liquid in the first Cold Aluminum Micro Channel Heat Exchanger **231** to boil away. The resulting refrigerant vapor stream then exits via a first Cold Aluminum Heat Exchanger Outlet Header **251.**

Along the second path, a warm high pressure liquid stream enters a first Warm Aluminum Micro Channel Heat Exchanger **232** via a first Warm Aluminum Micro Channel Heat Exchanger Inlet Header **252.** The first Warm Aluminum Micro Channel Heat Exchanger **232** is in thermal contact with the first Phase Change Composite Slab **221.** Heat flows into the first Phase Change Composite Slab **221** from the first Warm Aluminum Micro Channel Heat Exchanger **232,** subcooling the high pressure liquid stream as it flows through the First Warm Aluminum Micro Channel Heat Exchanger **232.** The now subcooled high pressure liquid stream exits the First Warm Aluminum Micro Channel Heat Exchanger **232** via a First Warm Aluminum Micro Channel Heat Exchanger Outlet Header **253.** Figure 5 illustrates the positions of the first Warm Aluminum Micro Channel Heat Exchanger Inlet and Outlet Headers 252, 253 in a co-flowing context wherein the flow is right to left across the PCCTESM 20; however, in a counterflow version of the PCCTESM 20, the Headers 252, 253 would be on reversed sides so that the flow is left to right across the PCCTESM 20.

In an embodiment, Aluminum Micro Channel Heat Exchangers 231-239 are stacked so that a first set of every other heat exchangers receives cold boiling refrigerant and a second set of every other heat exchangers receives warm high pressure liquid to be subcooled. For example, in an embodiment, referring to FIG 5, more than at least two Phase Change Composite Slabs 223-229 can be stacked in thermal contact atop the structure described hereinabove with alternating cold and hot Aluminum Micro Channel Heat Exchangers **231-239,** or more, disposed therebetween. For example, atop the First Warm Aluminum Micro Channel Heat Exchanger **232** is disposed in thermal contact another phase change composite slab, for example a second Phase Change Composite Slab **222.** Heat flows into the second Phase Change Composite Slab **222** from the first Warm Aluminum Micro Channel Heat Exchanger **232,** subcooling the high pressure liquid stream as it flows through the First Warm Aluminum Micro Channel Heat Exchanger **232.**

Continuing the arrangement of components in thermal contact upwardly as shown in FIG. 5, above the second Phase Change Composite Slab **222** is disposed in thermal contact a Second Cold Aluminum Micro Channel Heat Exchanger **233.** Heat is free to flow from the second Phase Change Composite Slab **222** into the second Cold Aluminum Micro Channel Heat Exchanger **233.** This heat flow can cause all remaining liquid in the second Cold Aluminum Micro Channel Heat Exchanger **233** to boil away.

Continuing, in an embodiment, above the second Cold Aluminum Micro Channel Heat Exchanger **233** is disposed in thermal contact a third Phase Change Composite Slab **223.** Heat is free to flow from the third Phase Change Composite Slab **223** into the second Cold Aluminum Micro Channel Heat Exchanger **233.** This heat flow can cause all remaining liquid in the second Cold Aluminum Micro Channel Heat Exchanger **233** to boil away.

In an embodiment, above the third Phase Change Composite Slab **223** is disposed in thermal contact a second Warm Aluminum Micro Channel Heat Exchanger **234.** Heat flows into the third Phase Change Composite Slab **223** from the second Warm Aluminum Micro Channel Heat Exchanger **234,** subcooling the high pressure liquid stream as it flows through the second Warm Aluminum Micro Channel Heat Exchanger **234.** Figure 5 illustrates the positions of second Warm Aluminum Micro Channel Heat Exchanger Inlet and Outlet Headers 256, 257 in a co-flowing context wherein the flow is right to left across the PCCTESM 20; however, in a counterflow version of the PCCTESM 20, the Headers 256, 257 would be on reversed sides so that the flow is left to right across the PCCTESM 20.

In an embodiment, above the second Warm Aluminum Micro Channel Heat Exchanger **234** is disposed in thermal contact a fourth Phase Change Composite Slab **224.** Heat flows into the fourth Phase Change Composite Slab **224** from the second Warm Aluminum Micro Channel Heat Exchanger **234,** subcooling the high pressure liquid stream as it flows through the second Warm Aluminum Micro Channel Heat Exchanger **234.**

In an embodiment, above the fourth Phase Change Composite Slab **224** is disposed in thermal contact a third Cold Aluminum Micro Channel Heat Exchanger **235.** Heat is free to flow from the fourth Phase Change Composite Slab **224** into the third Cold Aluminum Micro Channel Heat Exchanger **235.** This heat flow can cause all remaining liquid in the third Cold Aluminum Micro Channel Heat Exchanger **235** to boil away.

In an embodiment, as illustrated in FIG 5, above the third Cold Aluminum Micro Channel Heat Exchanger **235** is disposed in thermal contact a fifth Phase Change Composite Slab **225.** Heat is free to flow from the fifth Phase Change Composite Slab **225** into the third Cold Aluminum Micro Channel Heat Exchanger **235.** This heat flow can cause all remaining liquid in the third Cold Aluminum Micro Channel Heat Exchanger **235** to boil away.

In an embodiment, above the fifth Phase Change Composite Slab **225** is disposed in thermal contact a third Warm Aluminum Micro Channel Heat Exchanger **236.** Heat flows into the fifth Phase Change Composite Slab **225** from the third Warm Aluminum Micro Channel Heat Exchanger **236,** subcooling the high pressure liquid stream as it flows through the third Warm Aluminum Micro Channel Heat Exchanger **236.** Figure 5 illustrates the positions of third Warm Aluminum Micro Channel Heat Exchanger Inlet and Outlet Headers 260, 261 in a co-flowing context wherein the flow is right to left across the PCCTESM 20; however, in a counterflow version of the PCCTESM 20, the Headers 260, 261 would be on reversed sides so that the flow is left to right across the PCCTESM 20.

In an embodiment, above the third Warm Aluminum Micro Channel Heat Exchanger **236** is disposed in thermal contact a sixth Phase Change Composite Slab **226.** Heat flows into the sixth Phase Change Composite Slab **226** from the third Warm Aluminum Micro Channel Heat Exchanger **236,** subcooling the high pressure liquid stream as it flows through the third Warm Aluminum Micro Channel Heat Exchanger **236.**

In an embodiment, above the sixth Phase Change Composite Slab **226** is disposed in thermal contact a fourth Cold Aluminum Micro Channel Heat Exchanger **237.** Heat is free to flow from the sixth Phase Change Composite Slab **226** into the fourth Cold Aluminum Micro Channel Heat Exchanger **237.** This heat flow can cause all remaining liquid in the fourth Cold Aluminum Micro Channel Heat Exchanger **237** to boil away.

In an embodiment, as illustrated in FIG 5, above the fourth Cold Aluminum Micro Channel Heat Exchanger **237** is disposed in thermal contact a seventh Phase Change Composite Slab **227.** Heat is free to flow from the seventh Phase Change Composite Slab **227** into the fourth Cold Aluminum Micro Channel Heat Exchanger **237.** This heat flow can cause all remaining liquid in the fourth Cold Aluminum Micro Channel Heat Exchanger **237** to boil away.

In an embodiment, above the seventh Phase Change Composite Slab **227** is disposed in thermal contact a fourth Warm Aluminum Micro Channel Heat Exchanger **238.** Heat flows into the seventh Phase Change Composite Slab **227** from the fourth Warm Aluminum Micro Channel Heat Exchanger **238,** subcooling the high pressure liquid stream as it flows through the fourth Warm Aluminum Micro Channel Heat Exchanger **238.** Figure 5 illustrates the positions of fourth Warm Aluminum Micro Channel Heat Exchanger Inlet and Outlet Headers 264, 265 in a co-flowing context wherein the flow is right to left across the PCCTESM 20; however, in a counterflow version of the PCCTESM 20, the Headers 264, 265 would be on reversed sides so that the flow is left to right across the PCCTESM 20.

In an embodiment, above the fourth Warm Aluminum Micro Channel Heat Exchanger **238** is disposed in thermal contact an eighth Phase Change Composite Slab **228.** Heat flows into the eighth Phase Change Composite Slab **228** from the fourth Warm Aluminum Micro Channel Heat Exchanger **238,** subcooling the high pressure liquid stream as it flows through the third Warm Aluminum Micro Channel Heat Exchanger **238.**

In an embodiment, above the eighth Phase Change Composite Slab **228** is disposed in thermal contact a fifth Cold Aluminum Micro Channel Heat Exchanger **239.** Heat is free to flow from the eighth Phase Change Composite Slab **228** into the fifth Cold Aluminum Micro Channel Heat Exchanger **239.** This heat flow can cause all remaining liquid in the fifth Cold Aluminum Micro Channel Heat Exchanger **239** to boil away.

In an embodiment, as illustrated in FIG 5, above the fifth Cold Aluminum Micro Channel Heat Exchanger **239** is disposed in thermal contact a ninth Phase Change Composite Slab **229.** Heat is free to flow from the ninth Phase Change Composite Slab **229** into the fifth Cold Aluminum Micro Channel Heat Exchanger **239.** This heat flow can cause all remaining liquid in the fifth Cold Aluminum Micro Channel Heat Exchanger **239** to boil away.

Continuing the pattern, in an embodiment additional layers of a Phase Change Composite Slab can be stacked in thermal contact between alternating Warm and Cold Aluminum Micro Channel Heat Exchangers as described hereinabove. Heat flows between the additional layers in like fashion as described hereinabove for the Phase Change Composite Slabs **221-229.**

In an embodiment, a plurality of first heat exchangers, for example, the first through fifth cold Aluminum Micro Channel Heat Exchangers **231, 233, 235, 237,** and **239** are in fluid communication with a first common inlet source and a first common outlet header. For example, in an embodiment, each of the first through fifth cold Aluminum Micro Channel Heat Exchangers **231, 233, 235, 237,** and **239** is supplied by a first through fifth Cold Aluminum Micro Channel Heat Exchanger Inlet Header **250, 254, 258, 262,** and **266,** respectively, which are all in fluid communication with and commonly supplied by the first common inlet source comprising the First Distributor **22** via the First Distributor Tubing **23.** A refrigerant vapor stream exits from each of the first through fifth cold Aluminum Micro Channel Heat Exchangers **231, 233, 235, 237,** and **239** via a first through fifth Cold Aluminum Micro Channel Heat Exchanger Outlet Header **251, 255, 259, 263,** and **267,** respectively, which are all in fluid communication with the first common outlet header comprising a Subcooled High Pressure Liquid Header **25.**

Similarly, in an embodiment, a plurality of second heat exchangers, for example, the first through fourth Warm Aluminum Micro Channel Heat Exchangers **232, 234, 236,** and **238** are in fluid communication with a second common inlet source and a second common outlet header. For example, in an embodiment, a warm high pressure liquid stream enters each of the first through fourth Warm Aluminum Micro Channel Heat Exchangers **232, 234, 236,** and **238** via first through fourth Warm Aluminum Micro Channel Heat Exchanger Inlet Headers **252, 256, 260,** and **264,** respectively, which are all in fluid communication with and commonly supplied by the second common inlet source comprising the Module Saturated High Pressure Liquid Header **65.** A subcooled high pressure liquid stream exits each of the first through fourth Warm Aluminum Micro Channel Heat Exchangers **232, 234, 236,** and **238** via a first through fourth Warm Aluminum Micro Channel Heat Exchanger Outlet Header **253, 257, 261,** and **265,** respectively, which are all in fluid communication with the second common outlet header comprising a Module Suction Header **26.** In an embodiment, as shown in FIG 5, atop the topmost component of the PCCTESM 20 is disposed a layer of insulation **202** and under the bottommost component of the PCCTESM **20** is disposed another layer of insulation **201.**

Consistent with the description above regarding co-flowing and counter-flowing refrigerant streams, in the co-flowing context of the PCCTESM 20, the first and second common inlet sources are disposed on a same side of the PCCTESM 20 and the first and second common outlet headers are disposed on a same side of the PCCTESM 20. However, in the counter-flowing context of the PCCTESM 20, the first and second common inlet sources are disposed on opposite sides of the PCCTESM 20 and the first and second common outlet headers are disposed on opposite sides of the PCCTESM 20.

In addition, in another embodiment, one or more of the plurality of first heat exchangers can be reversed to flow in an opposite direction than the others of the plurality of first heat exchangers. Similarly, one or more of the plurality of second heat exchangers can be reversed to flow in an opposite direction than the others of the plurality of second heat exchangers. By reversing one or more of the first and/or second pluralities of heat exchangers relative to the others of the first and second pluralities of heat exchangers, the configuration of the PCCTESM can be a combination of co-flowing and counter-flowing refrigerant streams. In such a PCCTESM 20 having a combination co-flowing and counter-flowing refrigerant streams, the plurality of first heat exchangers are in fluid communication with a first common inlet source and a first common outlet header. Similarly, in such a PCCTESM 20 having a combination co-flowing and counter-flowing refrigerant streams, the plurality of second heat exchangers are in fluid communication with a second common inlet source and a second common outlet header.

The first through fifth Cold Aluminum Micro Channel Heat Exchanger Inlet Headers **250, 254, 258, 262,** and **266** receive a mixture of cold boiling liquid and vapor from Module Electronic Expansion Valve **21** shown in FIGS **1** and **6****.** The first through fourth Warm Aluminum Micro Channel Heat Exchanger Inlet Headers **252, 256, 260,** and **264** may receive warm high pressure liquid to be subcooled within the PCCTESM **20.** The first through fifth Cold Aluminum Micro Channel Heat Exchanger Outlet Headers **251, 255, 259, 263,** and **267** may convey cold refrigerant vapor having a few degrees of superheat. The first through fourth Warm Aluminum Micro Channel Heat Exchanger Outlet Headers **253, 257, 261,** and **265** may convey streams of subcooled high pressure liquid.

While a singular PCCTESM **20** has been described herein, multiples of same maybe employed in any given system. These may be interconnected in series or in parallel.

Now returning to FIG **1** (and FIG **6****),** in an embodiment, cold, slightly superheated vapor exits the PCCTESM **20** and enters the Module Suction Header **26.** In an embodiment a Module Superheat Thermistor **29** and a Module Superheat Pressure Transmitter **30** sense superheat and may be interconnected to a Module Electronic Valve Controller **33.** In an embodiment subcooled high pressure liquid exits the PCCTESM 20 and enters a Subcooled High Pressure Liquid Header **25.** Subcooled high pressure liquid exits the Subcooled High Pressure Liquid Header **25** and enters a Subcooled High Pressure Liquid Line **61.**

In an embodiment a Module Thermistor **27** may sense subcooled high pressure liquid temperature and, through software regulate a Variable Frequency Compressor **39** speed inside the ACCU **44** to maintain a desired controlled temperature. In an embodiment subcooled high pressure liquid flows down the Subcooled High Pressure Liquid Line **61** to a Tee **68.** In an embodiment a branch line Subcooled High Pressure Liquid Line **61** connects to an Electronic Expansion Valve 66 where it flashes down to a lower pressure which may feed a mixture of cold refrigerant liquid and vapor through an Air Handling Unit Electronic Expansion Valve Distributor Tubing **58** to a Fan Coil Unit Evaporator **47** inside a Fan Coil Unit **46.** In an embodiment the Fan Coil Unit **46** may be singular or there may be multiples of same to provide comfort air conditioning to a building or facility.

In an embodiment a Thermostat **19** may control a zone temperature conditioned by the Fan Coil Unit **46.** From the run of Tee **68,** in an embodiment subcooled high pressure liquid continues to flow through Subcooled High Pressure Liquid Line **61** to an Air Handling Unit Electronic Expansion Valve **56** where it flashes down to a lower pressure which then feeds a mixture of cold liquid and vapor through an Air Handling Unit Electronic Expansion Valve Distributor **57** and into the Air Handling Unit Electronic Expansion Valve Distributor Tubing **58** which in an embodiment then may feed this mixture to an Air Handling Unit Evaporator **51** inside a Space Air Handling Unit **50.** In an embodiment air Handling Unit Fan **53** draws air from a conditioned space through an Air Handling Unit Filter Bank **52** and into Air Handling Unit Evaporator **51.** Air is cooled by the boiling and evaporating process inside Air Handling Unit Evaporator **51** which converts cold liquid into cold vapor.

In an embodiment said slightly superheated cold vapor exits the Air Handling Unit Evaporator **51** and enters an Air Handling Unit Suction Line **45.** In an embodiment an Air Handling Unit Expansion Valve Superheat Thermistor **59** and an Air Handling Unit Expansion Valve Superheat Pressure Transmitter **60,** through their interconnection to an Air Handling Unit Expansion Valve Controller **63** regulate the degrees of superheat within the Air Handling Unit Evaporator **51.** In an embodiment this slightly superheated vapor may then flow through the Air Handling Unit Suction Line **45** to a Tee **67** where it may combine with vapor returning from the Fan Coil Unit Evaporator **47** inside the Fan Coil Unit **46.** In an embodiment this vapor may then flow to a Tee **64** where it may combine with vapor returning from the PCCTESM **20.** In an embodiment this combined suction vapor may then flow through a Combined Suction Line **32** to a Suction Line Stop Valve **35** inside the ACCU **44.** After exiting the Suction Line Stop Valve **35,** in an embodiment, vapor may enter a Suction Trap **36** after passing through a Suction Inlet Line **34** to the Suction Trap **36.** In an embodiment vapor then may enter a Compressor Inlet Suction Line **38,** then may enter the Variable Frequency Compressor **39.** The purpose of the Suction Trap **36** is to catch any liquid that may exit any connected evaporator in order to protect the Variable Frequency Compressor **39.** Those schooled in refrigeration techniques will be familiar with the deleterious effects of liquid upon a scroll compressor in that said liquid tends to dilute lubricating oils which is harmful to bearings within said compressor.

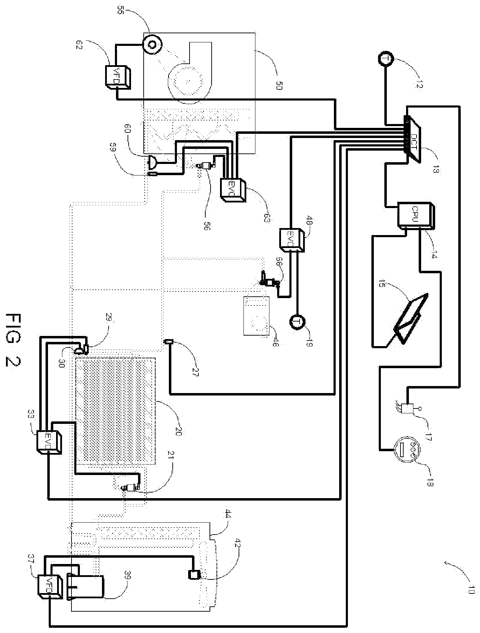

In an embodiment suction vapor is then compressed inside the Variable Frequency Compressor **39** which simultaneously raises both its pressure and temperature. This now hot vapor flows into a Hot Gas Line **40,** then into an Air Cooled Condenser **41** where it is first de-superheated to its condensing temperature. Upon reaching its condensing temperature, this vapor begins to change phase to a high pressure liquid stream wherein the refrigeration process thus described hereinabove may be repeated over infinite cycles. A condenser Fan **43** pulls ambient air over the Air Cooled Condenser **41** to remove heat from high pressure hot gas, thus converting said hot gas back into a reusable high pressure liquid stream. A Condenser Fan Motor **42,** the Variable Frequency Compressor **39** and their controls will be described within FIG **2** which follows.

The method of control for the System **10** in an embodiment may now be described and understood as shown in FIG **2****.** Heavy dark lines represent control interconnections between various apparatus shown comprising System **10.** These lines may contain wiring in either 120 volts or 0 - 10 VDC, 0 - 5 VDC or 4 -20 mA, depending upon the manufacturer's controls utilized for said functions.

While the Space Air Handling Unit **50** and the Fan Coil Unit **46** are shown as singular apparatus, in other embodiments multiples of same may exist within the System **10.** Thermostatic control of the Air Handling Unit **50** may be accomplished by a Space Thermostat **12** which, in an embodiment, may be wired to a Data Collection Terminal **13.** The Data Collection Terminal **13** may then be wired to a Central Processor Unit **14** which contains the software control for this system. The Central Processor Unit **14** may then be interconnected to a Computer **15.** Software within the Central Processor Unit **14** simultaneously controls the Electronic Expansion Valve Controller **63** and an Air Handling Unit Variable Frequency Drive **62** to maintain space temperature. The Electronic Expansion Valve Controller **63** in turn positions the port within the Air Handling Unit Electronic Expansion Valve **56** using input from the Air Handling Unit Expansion Valve Superheat Thermistor **59** and the Air Handling Unit Expansion Valve Superheat Pressure Transmitter **60** to maintain a fixed refrigerant superheat setting within the software in the Central Processor Unit **14.**

In an embodiment the Coil Unit Thermostat **19** may send its signal to an Electronic Expansion Valve Controller **48** to position the port within the Electronic Expansion Valve **66** to maintain a particular zone temperature.

In an embodiment the Module Thermistor **27** may be wired to the Data Collection Terminal **13** which in turn sends its signal to control the temperature of high pressure liquid exiting the PCCTESM **20** by controlling the port within the Module Electronic Expansion Valve **21.** In an embodiment the Module Electronic Valve Controller **33** may receive signals from the Module Superheat Thermistor **29** and the Module Superheat Pressure Transmitter **30** through the Module Electronic Valve Controller **33** to maintain the superheat setting of the Module Electronic Expansion Valve **21.**

In an embodiment the ACCU **44** may supply a stream of saturated high pressure liquid to the Module Electronic Expansion Valve **21** and simultaneously through a separate tubing connection, supply saturated liquid to the warm side of the PCCTESM **20** in order that saturated warm liquid may become subcooled within internal heat transfer tubing of the PCCTESM **20.** In an embodiment the Module Thermistor **27** varies the speed of the Variable Frequency Compressor **39** and the Condenser Fan Motor **42** through a Condenser Variable Frequency Drive **37.** This frequency drive may, in turn, be interconnected to the Data Collection Terminal **13.** Software within the Central Processor Unit **14** may be programmed to simultaneously recognize the particular electric utility on-peak time period and the simultaneous state of charge of the PCCTESM **20.** Said software may be written to favor highest speeds of the Variable Frequency Compressor **39** and the Condenser Fan Motor **42** during the coolest night-time ambient hours, by shifting highest electrical demand during utility on-peak hours.

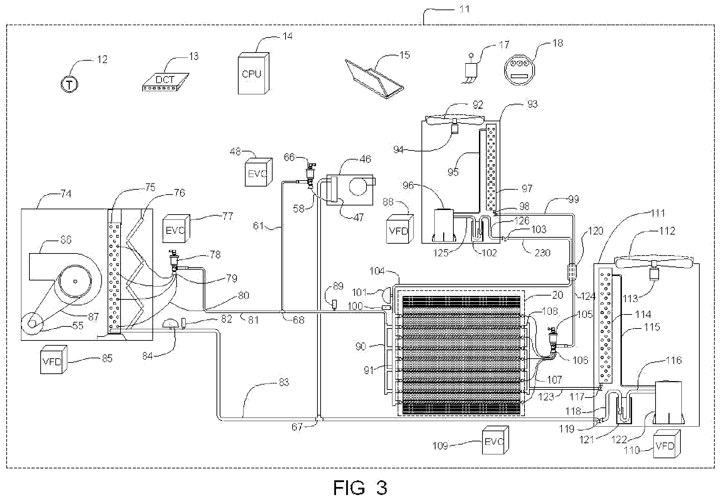

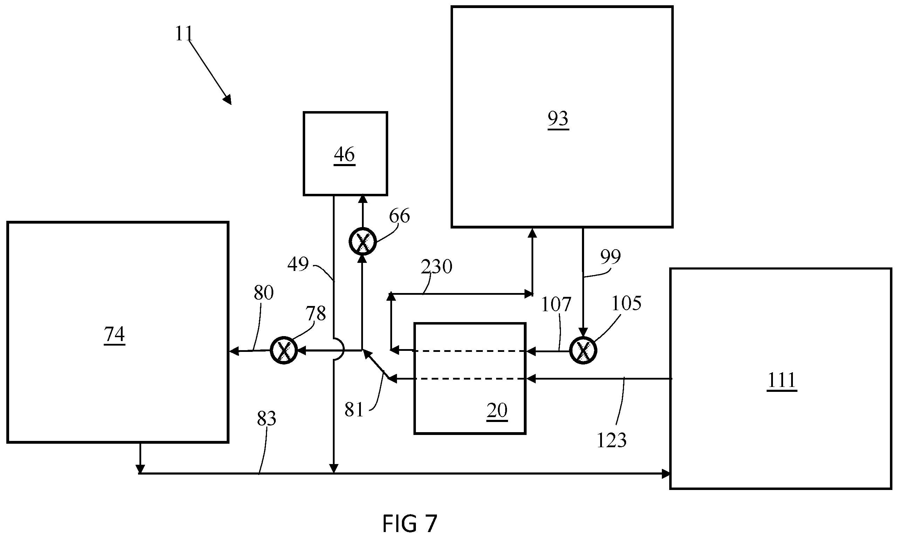

FIGS **3** and **7** depict schematic diagrams of a second embodiment of a System **11** wherein dual condensing units are utilized. FIG 7 is a simplified version of FIG 3 wherein minor details have been removed to show the basic structure and interconnections of the underlying components. An ACCU **111** provides a stream of saturated high pressure liquid that first passes through the PCCTESM **20** to be subcooled, then passes to an Air Handling Unit **74** to meet building cooling loads. A Supplemental ACCU **93** may be utilized to remove heat from the PCCTESM **20.** Those schooled in refrigeration technologies will recognize the advantage of this arrangement in that each ACCU **93, 111** may run at differing evaporating temperatures.

In an embodiment, a stream of saturated high pressure liquid may exit ACCU **111** after passing through a High Pressure Liquid Stop Valve **117** and into a Saturated High Pressure Liquid Line **123** which may connect to a Module Saturated High Pressure Liquid Header **108.** In an embodiment, high pressure liquid then may become subcooled inside the PCCTESM **20.** In an embodiment, after passing through the circuits within the PCCTESM **20,** this now subcooled stream of high pressure liquid enters a Subcooled High Pressure Liquid Header **90,** then enters a Subcooled High Pressure Liquid Line **81** where it may connect to a Tee **68.** In an embodiment, a branch of the Tee **68** carries subcooled high pressure liquid to the Fan Coil Unit **46** after passing through the Electronic Expansion Valve **66** and into the Air Handling Unit Electronic Expansion Valve Distributor Tubing **58,** then into the Fan Coil Unit Evaporator **47** to meet specific zone cooling requirements. While only a singular Fan Coil Unit **46** has been shown, in other embodiments multiples of same may exist within System **11.**

In an embodiment, subcooled high pressure liquid travels down the Subcooled High Pressure Liquid Line **81** and into an Electronic Expansion Valve **78** where it then moves through a Distributor **79** and into Distributor Tubing **80** where it then may feed an Evaporator **75** inside the Air Handling Unit **74** to meet building cooling needs. While a singular Air Handling Unit **74** has been shown, in other embodiments multiples of these may exist within the System **11.** The Space Thermostat **12** may control a Variable Frequency Drive 85 to set required fan speed as well as an Expansion Valve Controller **77** which controls the quantity of liquid to be fed to the Evaporator **75** in accordance within software in the Central Processor Unit **14.** In an embodiment, the Variable Frequency Drive **85** controls the quantity of air to be delivered by an Air Handling Unit Fan **86** which is driven by a Belt Drive **87** and an Air Handling Unit Fan Motor **55.** Air returning from the building first enters a Filter Bank **76,** then passes through the Evaporator **75** in a draw-through arrangement which is typical for nearly all air handling units. The port position within the Electronic Expansion Valve **78** may be controlled by an Air Handling Unit Expansion Valve Superheat Thermistor **82** and an Air Handling Unit Expansion Valve Superheat Pressure Transmitter **84,** the duality of which sense and control refrigerant vapor superheat.

In an embodiment, the now slightly superheated cold refrigerant vapor exiting the Evaporator **75** may travel into a Suction Line **83** which may connect to a Tee **67.** At this juncture, slightly superheated cold refrigerant vapor from the Fan Coil Unit Evaporator **47** mixes with vapor from the Evaporator **75** and may continue down the Suction Line **83** and into a Suction Line Stop Valve **119** within the ACCU **111.** In an embodiment, cold superheated refrigerant vapor may then enter a Suction Line Inlet **118** to a Suction Trap **121,** then into a Compressor Suction Line **116** and finally into a Variable Speed Compressor **122.** The speeds of both the Variable Speed Compressor **122** and a Condenser Fan **112** may be controlled by the Variable Frequency Drive **110.**

In an embodiment, after passing through the Variable Speed Compressor **122** both pressure and temperature of refrigerant vapor has now been raised to a point where it may be condensed back into a high pressure liquid within an Air Cooled Condenser **114** after passing through a Condensing Unit Hot Gas Line **115.** The purpose of the Suction Trap **121** is to catch and temporarily retain any refrigerant liquid that momentarily may exit either the Fan Coil Unit Evaporator **47** or the Evaporator **75** because liquid is incompressible inside the Variable Speed Compressor **122.** Liquid also combines with refrigerant oil which dilutes it and said oil-liquid mixtures may become deleterious to bearings inside the Variable Speed Compressor **122.**

Still referring to FIGS **3** and **7****,** a function of the Supplemental ACCU **93** within the System **11,** in an embodiment, may be to provide a stream of high pressure liquid refrigerant to a Module Electronic Expansion Valve **105** which removes latent heat from the PCCTESM **20.** Refrigerant streams moved by the ACCU **111** and the Supplemental ACCU **93** do not mix one with the other and are therefore separate permitting use of a different type of refrigerant for either condensing unit if warranted by project specifics.

In an embodiment, a stream of high pressure liquid refrigerant leaves a Supplemental Air Cooled Condenser **97** through a Supplemental High Pressure Liquid Stop Valve **98** and enters a Supplemental High Pressure Liquid Line **99** which connects to a Liquid-To-Suction Heat Exchanger **120** which gives up heat to incoming cold refrigerant vapor which superheats this cold vapor. A stream of now subcooled high pressure liquid enters a Supplemental Subcooled High Pressure Liquid Line **104** which may connect to the Module Electronic Expansion Valve **105** which may be joined with a Module Electronic Expansion Valve Distributor **106** which then feeds a mixture of cold refrigerant liquid and vapor into each Module Electronic Expansion Valve Distributor Tubing **107** which then may connect to each Cold Aluminum Micro Channel Heat Exchanger Inlet Header **250, 254, 258, 262, 266** within the PCCTESM **20** shown in FIG **5****.** Heat flows from each Phase Change Composite Slab **221, 222, 223, 224, 225, 226, 227, 228, 229** whenever a Supplemental Variable Speed Compressor **96** is in operation which may freeze the wax contained within each said Phase Change Composite Slab **221, 222, 223, 224, 225, 226, 227, 228, 229.** This same heat flow may boil cold liquid refrigerant inside each of the Cold Aluminum Micro Channel Heat Exchangers **231, 233, 235, 237, 239** inside the PCCTESM **20** shown in FIG **5****.**

In the embodiment of the System 11, similar to that of the System 10, a plurality of first heat exchangers, for example, the first through fifth cold Aluminum Micro Channel Heat Exchangers **231, 233, 235, 237,** and **239** are in fluid communication with a first common inlet source and a first common outlet header. For example, in this embodiment, each of the first through fifth cold Aluminum Micro Channel Heat Exchangers **231, 233, 235, 237,** and **239** is supplied by a first through fifth Cold Aluminum Micro Channel Heat Exchanger Inlet Header **250, 254, 258, 262,** and **266,** respectively, which are all in fluid communication with and commonly supplied by the first common inlet source comprising the Module Electronic Expansion Valve Distributor **106** via the Module Electronic Expansion Valve Distributor Tubing **107.** A refrigerant vapor stream exits from each of the first through fifth cold Aluminum Micro Channel Heat Exchangers **231, 233, 235, 237,** and **239** via a first through fifth Cold Aluminum Micro Channel Heat Exchanger Outlet Header **251, 255, 259, 263,** and **267,** respectively, which are all in fluid communication with the first common outlet header comprising a Module Suction Header **91.**

Similarly, in the embodiment of the System 11, a plurality of second heat exchangers, for example, the first through fourth Warm Aluminum Micro Channel Heat Exchangers **232, 234, 236,** and **238** are in fluid communication with a second common inlet source and a second common outlet header. For example, in an embodiment, a warm high pressure liquid stream enters each of the first through fourth Warm Aluminum Micro Channel Heat Exchangers **232, 234, 236,** and **238** via first through fourth Warm Aluminum Micro Channel Heat Exchanger Inlet Headers **252, 256, 260,** and **264,** respectively, which are all in fluid communication with and commonly supplied by the second common inlet source comprising the Module Saturated High Pressure Liquid Header **108.** A subcooled high pressure liquid stream exits each of the first through fourth Warm Aluminum Micro Channel Heat Exchangers **232, 234, 236,** and **238** via a first through fourth Warm Aluminum Micro Channel Heat Exchanger Outlet Header **253, 257, 261,** and **265,** respectively, which are all in fluid communication with the second common outlet header comprising the Subcooled High Pressure Liquid Header 90.

Again looking at FIG **5****,** in an embodiment a stream of cold, slightly superheated vapor leaves each of the Cold Aluminum Micro Channel Heat Exchangers **231, 233, 235, 237, 239** and enters each respective Cold Aluminum Micro Channel Heat Exchanger Outlet Header **251, 255, 259, 263** and **267.** In an embodiment, this cold vapor stream enters the Module Suction Header **91,** then enters the Supplemental Condensing Unit Suction Line **104.** This vapor stream then enters the Liquid To Suction Heat Exchanger **120.** Inside the Liquid To Suction Heat Exchanger **120** a heat transfer process takes place wherein heat is transferred from the incoming high pressure stream from the Supplemental ACCU **93** which simultaneously further superheats the incoming cold, low pressure vapor stream. In an embodiment, this now superheated low pressure vapor stream then enters a Supplemental Condensing Unit Suction Line Stop Valve **103.** Superheated low pressure suction vapor then flows into a Suction Trap Entering Line **126** and enters a Supplemental Condensing Unit Suction Trap **102.** Those schooled in refrigeration technology may question the need for the Supplemental Condensing Unit Suction Trap **102** if the suction vapor stream is always in a superheated state. However, the Supplemental Condensing Unit Suction Trap **102** is an additional means of compressor protection to preclude any possibility that refrigerant in a liquid state could momentarily exit any of the Cold Aluminum Micro Channel Heat Exchangers **231, 233, 235, 237, 239** within the PCCTESM **20.**

Momentary liquid flood-backs can and do occur due to momentary malfunctions with the Module Electronic Expansion Valve **105.** In such a circumstance, superheated low pressure suction vapor then enters a Compressor Suction Line **125** which enters the Supplemental Variable Speed Compressor **96** where both its pressure and temperature increase. This now high pressure superheated vapor stream flows into a Supplemental Condensing Unit Hot Gas Line **95** then into the Supplemental Air Cooled Condenser **97** where it first gives up its superheat then begins to condense back into a high pressure liquid state for reuse for the continuing process of vapor compression refrigeration.

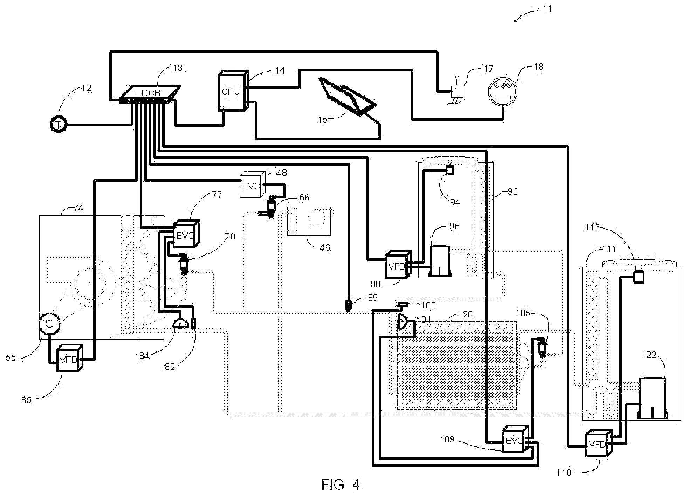

Turning now to FIG **4****,** the method of control for the System **11** in an embodiment will be explained. As evidenced in examination of FIG **4****,** this system differs from the System **10** in that dual condensing units are utilized. The function of Supplemental ACCU **93** may be to remove stored heat from the PCCTESM **20** whereas the function of ACCU **111** may be to meet building cooling loads. The schooled in the art will recognize that these two condensing units may run with differing suction pressures in that the freezing temperature of the PCCTESM **20** may fall in a temperature range of 4 °C to 6 °C. Assuming a 6 °C temperature difference between the phase change composite freezing temperature and the saturated suction temperature of Supplemental ACCU **93,** yields a -2 °C to 0 °C saturated suction temperature.

Assume that the System **11** is located in a hot dry climate, for example, such as experienced in the Desert Southwest region of the U.S., where it is not unusual for the daily high ambient dry bulb temperature to reach 48 °C with a simultaneous very dry -10 °C dew point temperature. Under these conditions, nearly all refrigeration evaporators in air conditioning duty will operate "dry" in that corresponding saturated evaporating temperatures may be as high as 9 °C, well above the -10 °C dew point. This duality of saturated evaporating temperatures becomes an energy efficiency opportunity as well as electrical demand reduction during local utility peaking periods. This feature is something electrical utilities find highly desirable in their service territories.

Again looking at FIG **4****,** the heavy black lines denote control interface between apparatus. In an embodiment a control interface may consist of 120 volt start-stop functions, 120 volt variable frequency that connect to variable frequency drives **85, 88,** and **110,** 12 volt and 4 - 20 mA signals. In an embodiment the Data Collection Terminal **13** receives signals from the Space Thermostat **12,** the Variable Frequency Drive **85,** the Expansion Valve Controller **77,** a Module Thermistor **89,** the Variable Frequency Drive **88,** the Module Electronic Valve Controller **109,** the Fan Coil Unit **46,** and the Variable Frequency Drive **110.** The Data Collection Terminal **13** is interconnected to the Central Processor Unit **14** which may contain the operating software for operation of the System **11.** User interface takes place through the Computer **15.**

During the electric utility off-peak period hours, the Supplemental Variable Speed Compressor **96** within the Supplemental ACCU **93** is enabled to run at 100% full speed until the PCCTESM **20** is fully recharged as indicated by both a Module Superheat Thermistor **100** and a Module Superheat Pressure Transmitter **101.** In an embodiment the Module Thermistor **89** may override by signaling a satisfied high pressure liquid temperature setpoint which may reduce the operating speed of the Supplemental Variable Speed Compressor **96.** The Variable Speed Compressor **122** within the ACCU **111** may run at whatever speed is required to maintain the setpoint temperature of the Space Thermostat **12.**

During the electric utility on-peak period hours, the operating speed of the Supplemental Variable Speed Compressor **96** within the Supplemental Air Cooled Condenser **93** is reduced to 50% but may be less than 50% if the Module Thermistor **89** becomes satisfied by the temperature of cold high pressure liquid reaching its control setpoint. The operating speed of the Variable Speed Compressor **122** within the ACCU **111** may also be reduced to hold an electrical demand not greater than its control setpoint. During this same time interval, the operating speed of the Air Handling Unit Fan Motor **55** within the Air Handling Unit **74** may also be reduced in order to maintain a maximum electrical demand setpoint.

During the on-peak electrical period, suction pressures of the Supplemental Variable Speed Compressor **96** and the Variable Speed Compressor **122** may differ significantly in that the Variable Speed Compressor **122** is meeting space cooling loads whereas the Supplemental Variable Speed Compressor **96** is recharging the PCCTESM **20.** As an example, the corresponding saturated suction temperature of the Supplemental Variable Speed Compressor **96** may be 0 °C whereas the saturated suction temperature of the Variable Speed Compressor **122** may be as high as 15 °C. This difference in suction pressures is an energy saving technique as well as a demand shifting technique.

### INDUSTRIAL APPLICABILITY

A cooling system is presented in two configurations. A first configuration utilizes a single ACCU to provide cooling to a space while simultaneously removing heat from a PCCTESM. A second configuration utilizes dual ACCUs including a first ACCU to provide cooling to a space and a second ACCU to remove heat from the PCCTESM. The system and all of its components are manufacturable by industry.

## Claims

1. A cooling system, comprising:
an air cooled condensing unit, called ACCU or first ACCU, (44) having a condenser outlet and a condenser inlet;
a phase change composite thermal energy storage module, called PCCTESM, (20) having first and second fluid paths disposed therethrough, each of the first and second fluid paths having an inlet and an outlet, the PCCTESM (20) further comprising a plurality of phase change composite slabs, called PCCS's, each disposed in thermal contact with the first and second fluid paths and each PCCS of the plurality of PCCS's being a separate fluidly sealed module;
at least one air handling unit, called AHU, (50) having an AHU inlet and an AHU outlet;
a first expansion valve (21) disposed between the condenser outlet and the first fluid path inlet;
a fluid connection (31) between the second fluid path inlet and the condenser outlet;
a second expansion valve (56) disposed between the AHU inlet and the second fluid path outlet; and
a second fluid connection (26, 45) that connects the first fluid path outlet and the AHU outlet to the condenser inlet.

2. The cooling system of claim 1, wherein the at least one AHU (44) comprises two or more AHU's each having an AHU inlet and an AHU outlet, wherein the second expansion valve (56) is disposed between each AHU inlet and the second fluid path outlet, and the second fluid connection (26, 45) connects the first fluid path outlet and each AHU outlet to the condenser inlet.

3. The cooling system of claim 2, wherein the first fluid path comprises a plurality of first heat exchangers (231, 233, 235, 237, 239) and the second fluid path comprises a plurality of second heat exchangers (232, 234, 236, 238).

4. The cooling system of claim 3, wherein the plurality of first heat exchangers (231, 233, 235, 237, 239) are in fluid communication with a first common inlet source (22, 23) and a first common outlet header (25), and the plurality of second heat exchangers (232, 234, 236, 238) are in fluid communication with a second common inlet source (65) and a second common outlet header (26).

5. The cooling system of claim 4, wherein each of the pluralities of first and second heat exchangers (231-239) preferably comprising an aluminum micro channel heat exchanger.

6. The cooling system of claim 1, further comprising:
a second air cooled condensing unit, called second ACCU, (93) having a second condenser outlet and a second condenser inlet.

7. The cooling system of claim 6, further comprising at least one refrigerant, the at least one refrigerant preferably comprising first and second refrigerants, and wherein the first refrigerant flows through the first ACCU (44) and the second refrigerant flows through the second ACCU (93).

8. The cooling system of claim 6-3, 4, or 5, wherein the plurality of PCCS's (20) is stacked in thermal contact with the plurality of first and second heat exchangers (231-239).

9. The cooling system of claim 1, wherein each PCCS (20) comprises a thermally conductive graphite matrix with a wax impregnated within the graphite matrix.

10. The cooling system of claim 9, wherein the wax has a liquid to solid phase change temperature in a range between about 2 °C and about 4 °C.

11. The cooling system of claim 1, 9 or 10, further comprising a plurality of first heat exchangers (231, 233, 235, 237, 239) in fluid communication with a first common inlet source (22, 23) and a first common outlet header (25), and a plurality of second heat exchangers (232, 234, 236, 238) in fluid communication with a second common inlet source (65) and a second common outlet header (26), wherein the plurality of PCCS's (20) and the pluralities of first and second heat exchangers (231-239) are preferably arranged in a layered structure that is configured so that each PCCS (20) has a first heat exchanger in thermal contact with a first side of the PCCS (20) and a second heat exchanger in thermal contact with a second opposite side of the PCCS (20).

## Patentansprüche

1. Kühlsystem, umfassend:
- eine luftgekühlte Kondensationseinheit (44), die als ACCU oder erste ACCU bezeichnet wird, mit einem Kondensatorauslass und einem Kondensatoreinlass;
- ein Phasenwechsel-Verbundwärmespeichermodul (20), das als PCCTESM bezeichnet wird, mit ersten und zweiten Fluidwegen, die durch sie hindurch angeordnet sind; wobei jeder der ersten und zweiten Fluidwege einen Einlass und einen Auslass aufweist, wobei das PCCTESM (20) ferner eine Mehrzahl von Phasenwechsel-Verbundplatten aufweist, die als PCCS bezeichnet werden, die jeweils in thermischem Kontakt mit den ersten und zweiten Fluidwegen angeordnet sind und wobei jede PCCS der Mehrzahl der PCCS ein separates, fluidversiegeltes Modul ist;
- zumindest eine als AHU bezeichnete Lüftungsanlage (50) mit einem AHU-Einlass und einem AHU-Auslass;
- ein erstes Expansionsventil (21), das zwischen dem Kondensatorauslass und dem Einlass des ersten Fluidwegs angeordnet ist;
- eine Fluidverbindung (31) zwischen dem zweiten Fluidwegeinlass und dem Kondensatorauslass;
- ein zweites Expansionsventil (56), das zwischen dem AHU-Einlass und dem zweiten Fluidwegauslass angeordnet ist; und
- eine zweite Fluidverbindung (26, 45), die den ersten Fluidwegauslass und den AHU-Auslass mit dem Kondensatoreinlass verbindet.

2. Kühlsystem nach Anspruch 1, wobei die zumindest eine AHU (44) zwei oder mehr AHUs aufweist, die jeweils einen AHU-Einlass und einen AHU-Auslass aufweisen, wobei das zweite Expansionsventil (56) zwischen jedem AHU-Einlass und dem zweiten Fluidwegauslass angeordnet ist; und die zweite Fluidverbindung (26; 45) den ersten Fluidwegauslass und jeden AHU-Auslass mit dem Kondensatoreinlass verbindet.

3. Kühlsystem nach Anspruch 2, wobei der erste Fluidweg eine Mehrzahl von ersten Wärmetauschern (231, 233, 235, 237, 239) aufweist und der zweite Fluidweg eine Mehrzahl von zweiten Wärmetauschern (232, 234, 236, 238) aufweist.

4. Kühlsystem nach Anspruch 3, wobei die Mehrzahl von ersten Wärmetauschern (231, 233, 235, 237, 239) in Fluidverbindung mit einer ersten gemeinsamen Einlassquelle (22, 23) und einem ersten gemeinsamen Auslassverteiler (25) steht und die Mehrzahl der zweiten Wärmetauscher (232, 234, 236, 238) in Fluidverbindung mit einer zweiten gemeinsamen Einlassquelle (65) und einem zweiten gemeinsamen Auslassverteiler (26) steht.

5. Kühlsystem nach Anspruch 4, wobei jede der Mehrzahlen der ersten und zweiten Wärmetauscher (231-239) vorzugsweise einen Aluminium-Mikrokanal-Wärmetauscher aufweist.

6. Kühlsystem nach Anspruch 1, das ferner aufweist:
- eine zweite luftgekühlte Kondensationseinheit (93), die als zweite ACCU bezeichnet wird, mit einem zweiten Kondensatorauslass und einem zweiten Kondensatoreinlass.

7. Kühlsystem nach Anspruch 6, das ferner zumindest ein Kältemittel aufweist, wobei das zumindest eine Kältemittel vorzugsweise ein erstes und ein zweites Kältemittel aufweist und wobei das erste Kältemittel durch die erste ACCU (44) und das zweite Kältemittel durch die zweite ACCU (93) fließt.

8. Kühlsystem nach Anspruch 3, 4 oder 5, wobei die Mehrzahl der PCCS (20) in thermischem Kontakt mit der Mehrzahl der ersten und zweiten Wärmetauscher (231-239) gestapelt ist.

9. Kühlsystem nach Anspruch 1, wobei jedes PCCS (20) eine wärmeleitende Graphitmatrix mit einem in die Graphitmatrix imprägnierten Wachs aufweist.

10. Kühlsystem nach Anspruch 9, wobei das Wachs eine Phasenübergangstemperatur von flüssig zu fest in einem Bereich zwischen etwa 2°C und etwa 4°C aufweist.

11. Kühlsystem nach Anspruch 1, 9 oder 10, das ferner eine Mehrzahl von ersten Wärmetauschern (231, 233, 235, 237, 239) aufweist, die in Fluidverbindung mit einer ersten gemeinsamen Einlassquelle (22, 23) und einem ersten gemeinsamen Auslassverteiler (25) steht, und eine Mehrzahl von zweiten Wärmetauschern (232, 234, 236, 238) aufweist, die in Fluidverbindung mit einer zweiten gemeinsamen Einlassquelle (65) und einem zweiten gemeinsamen Auslassverteiler (26) steht, wobei die Mehrzahl der PCCS (20) und die Mehrzahlen der ersten und zweiten Wärmetauscher (231-239) vorzugsweise in einer geschichteten Struktur angeordnet sind, die eingerichtet ist, so dass jede PCCS (20) einen ersten Wärmetauscher in thermischem Kontakt mit einer ersten Seite der PCCS (20) und einen zweiten Wärmetauscher in thermischem Kontakt mit einer zweiten gegenüberliegenden Seite der PCCS (20) aufweist.

## Revendications

1. Système de refroidissement comprenant :
- une unité de condensation refroidie par air, appelée ACCU ou première ACCU, (44) ayant une sortie de condenseur et une entrée de condenseur ;
- un module de stockage d'énergie thermique composite à changement de phase, appelé PCCTESM (20), ayant des premier et second trajets de fluide disposés à travers celui-ci, chacun des premier et second trajets de fluide ayant une entrée et une sortie, le PCCTESM (20) comprenant en outre une pluralité de dalles composites à changement de phase appelées PCCS, chacune étant disposée en contact thermique avec les premier et second trajets de fluide et chaque PCCS de la pluralité de PCCS étant un module séparé et étanche aux fluides ;
- au moins une unité de traitement de l'air, appelée AHU, (50) ayant une entrée et une sortie d'AHU ;
- un premier détendeur (21) disposé entre la sortie de condenseur et l'entrée du premier trajet de fluide ;
- une connexion fluidique (31) entre l'entrée du second trajet de fluide et la sortie de condenseur ;
- un second détendeur (56) disposé entre l'entrée de l'AHU et la sortie du second trajet de fluide ; et
- une seconde connexion fluidique (26, 45) qui relie la sortie du premier trajet de fluide et la sortie de l'AHU à l'entrée de condenseur.

2. Système de refroidissement selon la revendication 1, dans lequel l'au moins une AHU (44) comprend deux AHU ou plus ayant chacune une entrée et une sortie d'AHU, dans lequel le second détendeur (56) est disposé entre chaque entrée d'AHU et la sortie du second trajet de fluide, et la seconde connexion fluidique (26, 45) relie la sortie du premier trajet de fluide et chaque sortie d'AHU à l'entrée de condenseur.

3. Système de refroidissement selon la revendication 2, dans lequel le premier trajet de fluide comprend une pluralité de premiers échangeurs de chaleur (231, 233, 235, 237, 239) et le second trajet de fluide comprend une pluralité de seconds échangeurs de chaleur (232, 234, 236, 238).

4. Système de refroidissement selon la revendication 3, dans lequel la pluralité de premiers échangeurs de chaleur (231, 233, 235, 237, 239) est en communication fluidique avec une première source d'entrée commune (22, 23) et un premier collecteur de sortie commun (25), et la pluralité de seconds échangeurs de chaleur (232, 234, 236, 238) est en communication fluidique avec une seconde source d'entrée commune (65) et un second collecteur de sortie commun (26).

5. Système de refroidissement selon la revendication 4, dans lequel chacune des pluralités de premier et second échangeurs de chaleur (231-239) comprend de préférence un échangeur de chaleur à microcanaux en aluminium.

6. Système de refroidissement selon la revendication 1, comprenant en outre:
- une seconde unité de condensation refroidie par air, appelée seconde ACCU, (93) ayant une seconde sortie de condenseur et une seconde entrée de condenseur.

7. Système de refroidissement selon la revendication 6, comprenant en outre au moins un fluide frigorigène, l'au moins un fluide frigorigène comprenant de préférence des premier et second fluides frigorigènes, et dans lequel le premier fluide frigorigène circule dans la première ACCU (44) et le second fluide frigorigène circule dans la seconde ACCU (93).

8. Système de refroidissement selon la revendication 3, 4 ou 5, dans lequel la pluralité de PCCS (20) est empilée en contact thermique avec la pluralité de premier et second échangeurs de chaleur (231-239).

9. Système de refroidissement selon la revendication 1, dans lequel chaque PCCS (20) comprend une matrice de graphite thermoconductrice avec une cire imprégnée dans la matrice de graphite.

10. Système de refroidissement selon la revendication 9, dans lequel la cire a une température de changement de phase liquide-solide comprise entre environ 2 °C et environ 4 °C.

11. Système de refroidissement selon la revendication 1, 9 ou 10, comprenant en outre une pluralité de premiers échangeurs de chaleur (231, 233, 235, 237, 239) en communication fluidique avec une première source d'entrée commune (22, 23) et un premier collecteur de sortie commun (25), et une pluralité de seconds échangeurs de chaleur (232, 234, 236, 238) en communication fluidique avec une seconde source d'entrée commune (65) et un second collecteur de sortie commun (26), dans lequel la pluralité de PCCS (20) et les pluralités de premier et second échangeurs de chaleur (231-239) sont de préférence disposées dans une structure en couches configurée de manière à ce que chaque PCCS (20) ait un premier échangeur de chaleur en contact thermique avec un premier côté du PCCS (20) et un second échangeur de chaleur en contact thermique avec un second côté opposé du PCCS (20).
